# EUROPEAN PATENT APPLICATION

(11) **EP 2 428 950 A2**
(43) Date of publication of application: **14.03.2012**
(21) Application number: 11192213.4
(22) Date of filing: 04.02.2008
(51) Int. Cl.: G10L 15/26, H04N 5/445, H04N 5/45, H04N 7/173, H04N 21/436, H04N 21/00

(54) **Presenting supplemental content for digital media using a multimodal application**

(30) Priority: 27.02.2007 US 679225
(62) Divisional of application: 08708662.5
(71) Applicant: Nuance Communications, Inc., Burlington, MA 01803 (US)
(72) Inventor: Cross Jr., Charles Willard, Wellington, FL Florida 33467 (US); Goodman, Brian, Norwalk, CT Connecticut 06851 (US); Jania, Frank Lawrence, Chapel Hill, NC North Carolina 27514 (US); Shaw, Darren Mark, Fareham, Hampshire PO15 7GL (GB)
(74) Representative: Driver, Virginia Rozanne

(57) **Abstract**

The invention relates to a method of rendering to a user data describing where to purchase an item depicted in a portion of digital media being rendered to the user, the method comprising rendering, by a multimodal application, operating on a multimodal device and implemented with a grammar, the portion of the digital media; receiving, by the multimodal application, as a user request a voice utterance from a user; determining, by the multimodal application using an automatic speech recognition (ASR) engine, a recognition result in dependence upon the voice utterance and the grammar, querying a content repository for supplemental content associated with at least a portion of the recognition result, comprising data describing where to purchase the item; and rendering, by the multimodal application, the supplemental content.

## Description

### FIELD OF THE INVENTION

The field of the invention is data processing, or, more specifically, methods, apparatus, and products for presenting supplemental content for digital media using a multimodal application.

### BACKGROUND OF THE INVENTION

User interaction with applications running on small devices through a keyboard or stylus has become increasingly limited and cumbersome as those devices have become increasingly smaller. In particular, small handheld devices like mobile phones and PDAs serve many functions and contain sufficient processing power to support user interaction through multimodal access, that is, by interaction in non-voice modes as well as voice mode. Devices which support multimodal access combine multiple user input modes or channels in the same interaction allowing a user to interact with the applications on the device simultaneously through multiple input modes or channels. The methods of input include speech recognition, keyboard, touch screen, stylus, mouse, handwriting, and others. Multimodal input often makes using a small device easier.

Multimodal applications are often formed by sets of markup documents served up by web servers for display on multimodal browsers. A 'multimodal browser,' as the term is used in this specification, generally means a web browser capable of receiving multimodal input and interacting with users with multimodal output, where modes of the multimodal input and output include at least a speech mode. Multimodal browsers typically render web pages written in XHTML + Voice ('X+V'). X+V provides a markup language that enables users to interact with an multimodal application often running on a server through spoken dialog in addition to traditional means of input such as keyboard strokes and mouse pointer action. Visual markup tells a multimodal browser what the user interface is look like and how it is to behave when the user types, points, or clicks. Similarly, voice markup tells a multimodal browser what to do when the user speaks to it. For visual markup, the multimodal browser uses a graphics engine; for voice markup, the multimodal browser uses a speech engine. X+V adds spoken interaction to standard web content by integrating XHTML (eXtensible Hypertext Markup Language) and speech recognition vocabularies supported by VoiceXML. For visual markup, X+V includes the XHTML standard. For voice markup, X+V includes a subset of VoiceXML. For synchronizing the VoiceXML elements with corresponding visual interface elements, X+V uses events. XHTML includes voice modules that support speech synthesis, speech dialogs, command and control, and speech grammars. Voice handlers can be attached to XHTML elements and respond to specific events. Voice interaction features are integrated with XHTML and can consequently be used directly within XHTML content.

In addition to X+V, multimodal applications also may be implemented with Speech Application Tags ('SALT'). SALT is a markup language developed by the Salt Forum. Both X+V and SALT are markup languages for creating applications that use voice input/speech recognition and voice output/speech synthesis. Both SALT applications and X+V applications use underlying speech recognition and synthesis technologies or 'speech engines' to do the work of recognizing and generating human speech. As markup languages, both X+V and SALT provide markup-based programming environments for using speech engines in an application's user interface. Both languages have language elements, markup tags, that specify what the speech-recognition engine should listen for and what the synthesis engine should 'say.' Whereas X+V combines XHTML, VoiceXML, and the XML Events standard to create multimodal applications, SALT does not provide a standard visual markup language or eventing model. Rather, it is a low-level set of tags for specifying voice interaction that can be embedded into other environments. In addition to X+V and SALT, multimodal applications may be implemented in Java with a Java speech framework, in C++, for example, and with other technologies and in other environments as well.

As multimodal devices pervade become more pervasive in society, multimodal technology has taken on increasingly important roles. Currently, however, vast arenas of digital communication do not take advantage of multimodal technology. One such arena concerns viewing digital media, especially digital video. Movie and video producers are becoming increasingly interested in producing digital media for the Internet as traditional broadcast devices and media playback devices converge with the Internet and computing technologies. This interest promises to yield a more interactive experience for users than current stand-alone broadcast models, which will generally lose audience appeal. As broadcast advertising models diminish in effectiveness, advertisers are changing the nature of ads by employing techniques such as product placement embedded during the media production. In order to provide viewers the ability to query and browse the media for supplement content such as, additional scenes, items, and people of interest, producers will annotate the media and generate indices that may be used to provide random access to the media and the annotated content. These trends in digital media, however, have not yet taken advantage of the potential uses of multimodal technology. As such, readers will appreciate that room for improvement exists in presenting supplemental content for digital media using a multimodal application.

### SUMMARY OF THE INVENTION

According to one aspect of the invention there is provided a method for presenting supplemental content for digital media using a multimodal application, the method implemented with a grammar of the multimodal application in an automatic speech recognition ('ASR') engine, with the multimodal application operating on a multimodal device supporting multiple modes of interaction including a voice mode and one or more non-voice modes, the multimodal application operatively coupled to the ASR engine, the method comprising: rendering, by the multimodal application, a portion of the digital media; receiving, by the multimodal application, a voice utterance from a user; determining, by the multimodal application using the ASR engine, a recognition result in dependence upon the voice utterance and the grammar; identifying, by the multimodal application, supplemental content for the rendered portion of the digital media in dependence upon the recognition result; and rendering, by the multimodal application, the supplemental content.

### BRIEF DESCRIPTION OF THE DRAWINGS

Embodiments of the invention will now be described, by way of example only, with reference to the accompanying drawings in which:
Figure 1 sets forth a network diagram illustrating an exemplary system for presenting supplemental content for digital media using a multimodal application according to embodiments of the present invention.
Figure 2 sets forth a block diagram of automated computing machinery comprising an example of a computer useful as a voice server in presenting supplemental content for digital media using a multimodal application according to embodiments of the present invention.
Figure 3 sets forth a functional block diagram of exemplary system for presenting supplemental content for digital media using a multimodal application according to embodiments of the present invention.
Figure 4 sets forth a block diagram of automated computing machinery comprising an example of a computer useful as a multimodal device in presenting supplemental content for digital media using a multimodal application according to embodiments of the present invention.
Figure 5 sets forth a flow chart illustrating an exemplary method of presenting supplemental content for digital media using a multimodal application according to embodiments of the present invention.
Figure 6 sets forth a flow chart illustrating a further exemplary method of presenting supplemental content for digital media using a multimodal application according to embodiments of the present invention.
Figure 7 sets forth a flow chart illustrating a further exemplary method of presenting supplemental content for digital media using a multimodal application according to embodiments of the present invention.

### DETAILED DESCRIPTION OF EXEMPLARY EMBODIMENTS

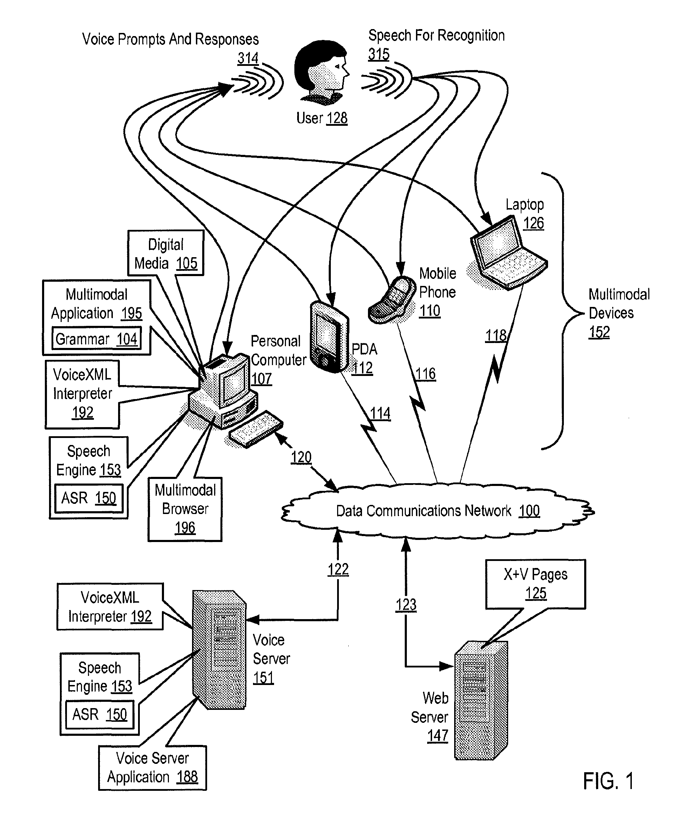

Exemplary methods, apparatus, and products for presenting supplemental content for digital media using a multimodal application according to embodiments of the present invention are described with reference to the accompanying drawings, beginning with Figure 1. Figure 1 sets forth a network diagram illustrating an exemplary system for presenting supplemental content for digital media using a multimodal application according to embodiments of the present invention. Presenting supplemental content for digital media using a multimodal application in this example is implemented with a multimodal application (195) operating in a multimodal browser (196) on a multimodal device (152). The multimodal application (195) is composed of one or more X+V pages. The multimodal device (152) supports multiple modes of interaction including a voice mode and one or more non-voice modes of user interaction with the multimodal application (195). The voice mode is represented here with audio output of voice prompts and responses (314) from the multimodal devices and audio input of speech for recognition (315) from a user (128). Non-voice modes are represented by input/output devices such as keyboards and display screens on the multimodal devices (152). The multimodal application (195) is operatively coupled to an automatic speed recognition ('ASR') engine (150) through a VoiceXML interpreter (192). The operative coupling may be implemented with an application programming interface (`API'), a voice service module, or a VOIP connection as explained more detail below.

The system of Figure 1 operates generally for presenting supplemental content for digital media using a multimodal application according to embodiments of the present invention. Presenting supplemental content for digital media (105) using a multimodal application according to embodiments of the present invention includes: rendering, by the multimodal application (195), a portion of the digital media (105); receiving, by the multimodal application (195), a voice utterance from a user; determining, by the multimodal application (195) using the ASR engine (150), a recognition result in dependence upon the voice utterance and a grammar (104); identifying, by the multimodal application (195), supplemental content for the rendered portion of the digital media (105) in dependence upon the recognition result; and rendering, by the multimodal application, the supplemental content.

In the example of Figure 1, the multimodal device (152) includes digital media (105). The digital media (105) is a set of digital codes representing content for rendering to a user. The content represented in the digital media (105) of Figure 1 may include video, audio tracks, presentations, or other content as will occur to those of skill in the art. As such, the digital media (105) may be implemented as digital video, digital audio, a digital presentation, or any other digital content. The digital media (105) may also store other data that may or may not be rendered to a user. Other data stored in the digital media (105) may include meta-data describing the content, additional data regarding the content, formatting data for the content, and any other data as will occur to those of skill in the art.

Because current computing systems are based primarily on a binary number system, the digital codes used to represent content and other data in the digit media (105) refer to the discrete values of '0' and '1.' In computing systems that utilize other number systems, however, digital codes may include other values. Content and other data may be represented in the digital media (105) according to any number of standards, specifications, and algorithms as will occur to those of skill in the art. Such standards, specifications, and algorithms may include, for example, the International Telecommunication Union's BT.601 standard, MPEG-4, MPEG-2, the Society of Motion Picture and Television Engineers' 421M video codec standard, Advanced Audio Coding ('AAC'), MPEG-1 Audio Layer 3, Windows Media Audio ('WMA'), JPEG, GIF, the QuickTime framework and file format, and many others.

In the example of Figure 1, the digital media (105) is annotated by the producers of the digital media (105). Annotated content may include content that describes portions of the digital media (105) or provides additional information regarding portions of the digital media (105). For example, annotated content may be implemented as a set of keywords that describe a particular scene in a digital video or implemented as additional information regarding the clothing of a character in a digital video. A producer may annotate the digital media by storing annotated content in a channel of the digital media (105) dedicated to storing annotated content using meta-data tags. Such an implementation may be similar to the mechanism used to store closed-captioning in digital video according to the Electronic Industries Alliance-708 standard. In other embodiments, the producer may annotate the digital media (105) by storing the annotated content in a content repository (not shown) rather than in a channel of the digital media (105). The annotated content stored in such a content repository may be associated with various portions of the digital media using, for example, time stamps, frame numbers, or any other mechanism to associate annotated content with portions of the digital media as will occur to those of skill in the art.

In the example of Figure 1, the multimodal application (195) renders supplemental content for the rendered portion of the digital media (105). Supplemental content is so called because it supplements the content provided to the user when the multimodal application renders a portion of the digital media (105). The supplement content may include annotated content for the digital media (105) such that the user is able to access the annotated content in addition to the portion of the digital media (105) currently being rendered. The supplement content may include another portion of the digital media (105) such that the user is able to access portions of the digital media (105) in addition to the portion of the digital media (105) currently being rendered. Because the supplement content may be implemented as annotated content or some other portion of the digital media, the supplemental content may be embedded in the digital media (105) itself or contained in a content repository.

Presenting supplemental content for digital media using a multimodal application (195) is implemented with a grammar (104) of the multimodal application (195) in the ASR engine (150). The grammar (104) of Figure 1 communicates to the ASR engine (150) the words and sequences of words that currently may be recognized. In the example of Figure 1, the grammar (104) includes grammar rules that advise an ASR engine or a voice interpreter which words and word sequences presently can be recognized. Grammars for use according to embodiments of the present invention may be expressed in any format supported by an ASR engine, including, for example, the Java Speech Grammar Format ('JSGF'), the format of the W3C Speech Recognition Grammar Specification ('SRGS'), the Augmented Backus-Naur Format (`ABNF') from the IETF's RFC2234, in the form of a stochastic grammar as described in the W3C's Stochastic Language Models (N-Gram) Specification, and in other grammar formats as may occur to those of skill in the art.

In the exemplary system of Figure 1, the grammar (104) includes grammar rules that specify recognition results according to the supplemental content for the rendered portion of the digital media (105). That is, the grammar rules of the grammar (104) specify words and phrases for recognition of user requests for supplemental content. Grammars typically operate as elements of dialogs, such as, for example, a VoiceXML <menu> or an X+V <form>. A grammar's definition may be expressed in-line in a dialog. Or the grammar may be implemented externally in a separate grammar document and referenced from with a dialog with a Uniform Resource Identifier (`URI'). Here is an example of a grammar expressed in JSFG that includes grammar rules that specify recognition results according to supplemental content:

```
 <grammar scope="dialog" ><![CDATA[
 #JSGF V1.0 iso-8859-1;
 grammar browse;
 public <browse> = <command> (<object> | <actor> | <character>) [<doing>];
 <command> = show [me] | find | where is | what is | who is;
 <doing> = wearing | eating | drinking | driving | kissing;
 <object> = BMW | automobiles | cars | Armani suit | champagne| Dom Perignon | Barcelona
 Chair;
 <actor> = [Daniel] [Craig] | [Eva] [Green] | [Mads] [Mikkelsen] [Judi] [Dench] | [Ivan]
 [Milicevic];
 <character> = [James] [Bond] | [Vesper] [Lynd] | Le Chiffre | M | Valenka | [The] Bond
 Women;
 ]]>
 </grammar>
```

In this example, the elements named <browse>, <command>, <doing>, <object>, <actor>, and <character> are rules of the grammar. Rules are a combination of a rulename and an expansion of a rule that advises an ASR engine or a VoiceXML interpreter which words presently can be recognized. In the example above, rule expansions includes conjunction and disjunction, and the vertical bars '|' mean 'or.' An ASR engine or a VoiceXML interpreter processes the rules in sequence, first <browse>, then <command>, then <doing>, then <object>, then <actor>, and then <character>. The <browse> rule accepts for recognition whatever is returned from the <command> rule along with whatever is returned from the <object> rule, the <actor> rule, or the <character> rule, and optionally whatever is returned from the <doing> rule. The browse grammar as a whole matches utterances like these, for example:
- "Show me the Bond Women,"
- "Who is James Bond kissing,"
- "What is Bond wearing," and
- "Find Judi Dench."

The exemplary grammar rules above specify recognition results according to supplemental content because the rule expansions for <object>, <actor>, and <character> rules contain annotated content in the form of keywords that may be embedded into the movie 'Casino Royale' by its producers using meta-data tags. Using software, these embedded keywords may be extracted from the digital video and converted into the exemplary grammar above. In some embodiments, however, the keywords for the various scenes in 'Casino Royale' may be contained in a content repository rather than embedded in the digital media containing the movie.

In the exemplary system of Figure 1, the multimodal application (196) operates in a multimodal browser (196), which provides an execution environment for the multimodal application (195). To support the multimodal browser (196) in processing the multimodal application (195), the system of Figure 1 includes a VoiceXML interpreter (192). The VoiceXML interpreter (192) is a software module of computer program instructions that accepts voice dialog instructions from a multimodal application, typically in the form of a VoiceXML <form> element. The voice dialog instructions include one or more grammars, data input elements, event handlers, and so on, that advise the VoiceXML interpreter (192) how to administer voice input from a user and voice prompts and responses to be presented to a user. The VoiceXML interpreter (192) administers such dialogs by processing the dialog instructions sequentially in accordance with a VoiceXML Form Interpretation Algorithm ('FIA').

A multimodal device on which a multimodal application operates is an automated device, that is, automated computing machinery or a computer program running on an automated device, that is capable of accepting from users more than one mode of input, keyboard, mouse, stylus, and so on, including speech input - and also providing more than one mode of output such as, graphic, speech, and so on. A multimodal device is generally capable of accepting speech input from a user, digitizing the speech, and providing digitized speech to a speech engine for recognition. A multimodal device may be implemented, for example, as a voice-enabled browser on a laptop, a voice browser on a telephone handset, an online game implemented with Java on a personal computer, and with other combinations of hardware and software as may occur to those of skill in the art. Because multimodal applications may be implemented in markup languages (X+V, SALT), object-oriented languages (Java, C++), procedural languages (the C programming language), and in other kinds of computer languages as may occur to those of skill in the art, a multimodal application may refer to any software application, server-oriented or client-oriented, thin client or thick client, that administers more than one mode of input and more than one mode of output, typically including visual and speech modes.

The system of Figure 1 includes several example multimodal devices:
- personal computer (107) which is coupled for data communications to data communications network (100) through wireline connection (120),
- personal digital assistant ('PDA') (112) which is coupled for data communications to data communications network (100) through wireless connection (114),
- mobile telephone (110) which is coupled for data communications to data communications network (100) through wireless connection (116), and
- laptop computer (126) which is coupled for data communications to data communications network (100) through wireless connection (118).

Each of the example multimodal devices (152) in the system of Figure 1 includes a microphone, an audio amplifier, a digital-to-analog converter, and a multimodal application capable of accepting from a user (128) speech for recognition (315), digitizing the speech, and providing the digitized speech to a speech engine for recognition. The speech may be digitized according to industry standard codecs, including but not limited to those used for Distributed Speech Recognition as such. Methods for 'COding/DECoding' speech are referred to as 'codecs.' The European Telecommunications Standards Institute ('ETSI') provides several codecs for encoding speech for use in DSR, including, for example, the ETSI ES 201 108 DSR Front-end Codec, the ETSI ES 202 050 Advanced DSR Front-end Codec, the ETSI ES 202 211 Extended DSR Front-end Codec, and the ETSI ES 202 212 Extended Advanced DSR Front-end Codec. In standards such as RFC3557 entitled

RTP Payload Format for European Telecommunications Standards Institute (ETSI) European Standard ES 201 108 Distributed Speech Recognition Encoding
and the Internet Draft entitled

RTP Payload Formats for European Telecommunications Standards Institute (ETSI) European Standard ES 202 050, ES 202 211, and ES 202 212 Distributed Speech Recognition Encoding,
the IETF provides standard RTP payload formats for various codecs. It is useful to note, therefore, that there is no limitation in the present invention regarding codecs, payload formats, or packet structures. Speech for presenting supplemental content for digital media using a multimodal application according to embodiments of the present invention may be encoded with any codec, including, for example:
- AMR (Adaptive Multi-Rate Speech coder)
- ARDOR (Adaptive Rate-Distortion Optimized sound codeR),
- Dolby Digital (A/52, AC3),
- DTS (DTS Coherent Acoustics),
- MP1 (MPEG audio layer-1),
- MP2 (MPEG audio layer-2) Layer 2 audio codec (MPEG-1, MPEG-2 and non-ISO MPEG-2.5),
- MP3 (MPEG audio layer-3) Layer 3 audio codec (MPEG-1, MPEG-2 and non-ISO MPEG-2.5),
- Perceptual Audio Coding,
- FS-1015 (LPC-10),
- FS-1016 (CELP),
- G.726 (ADPCM),
- G.728 (LD-CELP),
- G.729 (CS-ACELP),
- GSM,
- HILN (MPEG-4 Parametric audio coding), and
- others as may occur to those of skill in the art.

As mentioned, a multimodal device according to embodiments of the present invention is capable of providing speech to a speech engine for recognition. The speech engine (153) of Figure 1 is a functional module, typically a software module, although it may include specialized hardware also, that does the work of recognizing and generating or 'synthesizing' human speech. The speech engine (153) implements speech recognition by use of a further module referred to in this specification as a ASR engine (150), and the speech engine carries out speech synthesis by use of a further module referred to in this specification as a text-to-speech ('TTS') engine (not shown). As shown in Figure 1, a speech engine (153) may be installed locally in the multimodal device (107) itself, or a speech engine (153) may be installed remotely with respect to the multimodal device, across a data communications network (100) in a voice server (151). A multimodal device that itself contains its own speech engine is said to implement a 'thick multimodal client' or 'thick client,' because the thick multimodal client device itself contains all the functionality needed to carry out speech recognition and speech synthesis - through API calls to speech recognition and speech synthesis modules in the multimodal device itself with no need to send requests for speech recognition across a network and no need to receive synthesized speech across a network from a remote voice server. A multimodal device that does not contain its own speech engine is said to implement a 'thin multimodal client' or simply a 'thin client,' because the thin multimodal client itself contains only a relatively thin layer of multimodal application software that obtains speech recognition and speech synthesis services from a voice server located remotely across a network from the thin client. For ease of explanation, only one (107) of the multimodal devices (152) in the system of Figure 1 is shown with a speech engine (153), but readers will recognize that any multimodal device may have a speech engine according to embodiments of the present invention.

A multimodal application (195) in this example provides speech for recognition and text for speech synthesis to a speech engine through the VoiceXML interpreter (192). As shown in Figure 1, the VoiceXML interpreter (192) may be installed locally in the multimodal device (107) itself, or the VoiceXML interpreter (192) may be installed remotely with respect to the multimodal device, across a data communications network (100) in a voice server (151). In a thick client architecture, a multimodal device (152) includes both its own speech engine (153) and its own VoiceXML interpreter (192). The VoiceXML interpreter (192) exposes an API to the multimodal application (195) for use in providing speech recognition and speech synthesis for the multimodal application. The multimodal application (195) provides dialog instructions, VoiceXML <form> elements, grammars, input elements, event handlers, and so on, through the API to the VoiceXML interpreter, and the VoiceXML interpreter administers the speech engine on behalf of the multimodal application. In the thick client architecture, VoiceXML dialogs are interpreted by a VoiceXML interpreter on the multimodal device. In the thin client architecture, VoiceXML dialogs are interpreted by a VoiceXML interpreter on a voice server (151) located remotely across a data communications network (100) from the multimodal device running the multimodal application (195).

The VoiceXML interpreter (192) provides grammars, speech for recognition, and text prompts for speech synthesis to the speech engine (153), and the VoiceXML interpreter (192) returns to the multimodal application speech engine (153) output in the form of recognized speech, semantic interpretation results, and digitized speech for voice prompts. In a thin client architecture, the VoiceXML interpreter (192) is located remotely from the multimodal client device in a voice server (151), the API for the VoiceXML interpreter is still implemented in the multimodal device (152), with the API modified to communicate voice dialog instructions, speech for recognition, and text and voice prompts to and from the VoiceXML interpreter on the voice server (151). For ease of explanation, only one (107) of the multimodal devices (152) in the system of Figure 1 is shown with a VoiceXML interpreter (192), but readers will recognize that any multimodal device may have a VoiceXML interpreter according to embodiments of the present invention. Each of the example multimodal devices (152) in the system of Figure 1 may be configured to order recognition results produced by an automatic speech recognition ('ASR') engine for a multimodal application by installing and running on the multimodal device a VoiceXML interpreter that orders recognition results produced by an automatic speech recognition ('ASR') engine according to embodiments of the present invention.

The use of these four example multimodal devices (152) is for explanation only, not for limitation of the invention. Any automated computing machinery capable of accepting speech from a user, providing the speech digitized to an ASR engine through a VoiceXML interpreter, and receiving and playing speech prompts and responses from the VoiceXML interpreter may be improved to function as a multimodal device according to embodiments of the present invention.

The system of Figure 1 also includes a voice server (151), which is connected to data communications network (100) through wireline connection (122). The voice server (151) is a computer that runs a speech engine (153) that provides voice recognition services for multimodal devices by accepting requests for speech recognition and returning text representing recognized speech. Voice server (151) also provides speech synthesis, text to speech ('TTS') conversion, for voice prompts and voice responses (314) to user input in multimodal applications such as, for example, X+V applications, SALT applications, or Java voice applications.

The system of Figure 1 includes a data communications network (100) that connects the multimodal devices (152) and the voice server (151) for data communications. A data communications network for presenting supplemental content for digital media using a multimodal application according to embodiments of the present invention is a data communications data communications network composed of a plurality of computers that function as data communications routers connected for data communications with packet switching protocols. Such a data communications network may be implemented with optical connections, wireline connections, or with wireless connections. Such a data communications network may include intranets, internets, local area data communications networks ('LANs'), and wide area data communications networks ('WANs'). Such a data communications network may implement, for example:
- a link layer with the Ethernet_{™} Protocol or the Wireless Ethernet_{™} Protocol,
- a data communications network layer with the Internet Protocol ('IP'),
- a transport layer with the Transmission Control Protocol ('TCP') or the User Datagram Protocol ('UDP'),
- an application layer with the HyperText Transfer Protocol ('HTTP'), the Session Initiation Protocol ('SIP'), the Real Time Protocol ('RTP'), the Distributed Multimodal Synchronization Protocol (`DMSP'), the Wireless Access Protocol ('WAP'), the Handheld Device Transfer Protocol ('HDTP'), the ITU protocol known as H.323, and
- other protocols as will occur to those of skill in the art.

The system of Figure 1 also includes a web server (147) connected for data communications through wireline connection (123) to network (100) and therefore to the multimodal devices (152). The web server (147) may be any server that provides to client devices X+V markup documents (125) that compose multimodal applications. The web server (147) typically provides such markup documents via a data communications protocol, HTTP, HDTP, WAP, or the like. That is, although the term 'web' is used to described the web server generally in this specification, there is no limitation of data communications between multimodal devices and the web server to HTTP alone. The markup documents also may be implemented in any markup language that supports non-speech display elements, data entry elements, and speech elements for identifying which speech to recognize and which words to speak, grammars, form elements, and the like, including, for example, X+V and SALT. A multimodal application in a multimodal device then, upon receiving from the web sever (147) an X+V markup document as part of a multimodal application, may execute speech elements by use of a VoiceXML interpreter (192) and speech engine (153) in the multimodal device itself or by use of a VoiceXML interpreter (192) and speech engine (153) located remotely from the multimodal device in a voice server (151).

The arrangement of the multimodal devices (152), the web server (147), the voice server (151), and the data communications network (100) making up the exemplary system illustrated in Figure 1 are for explanation, not for limitation. Data processing systems useful for presenting supplemental content for digital media using a multimodal application according to various embodiments of the present invention may include additional servers, routers, other devices, and peer-to-peer architectures, not shown in Figure 1, as will occur to those of skill in the art. Data communications networks in such data processing systems may support many data communications protocols in addition to those noted above. Various embodiments of the present invention may be implemented on a variety of hardware platforms in addition to those illustrated in Figure 1.

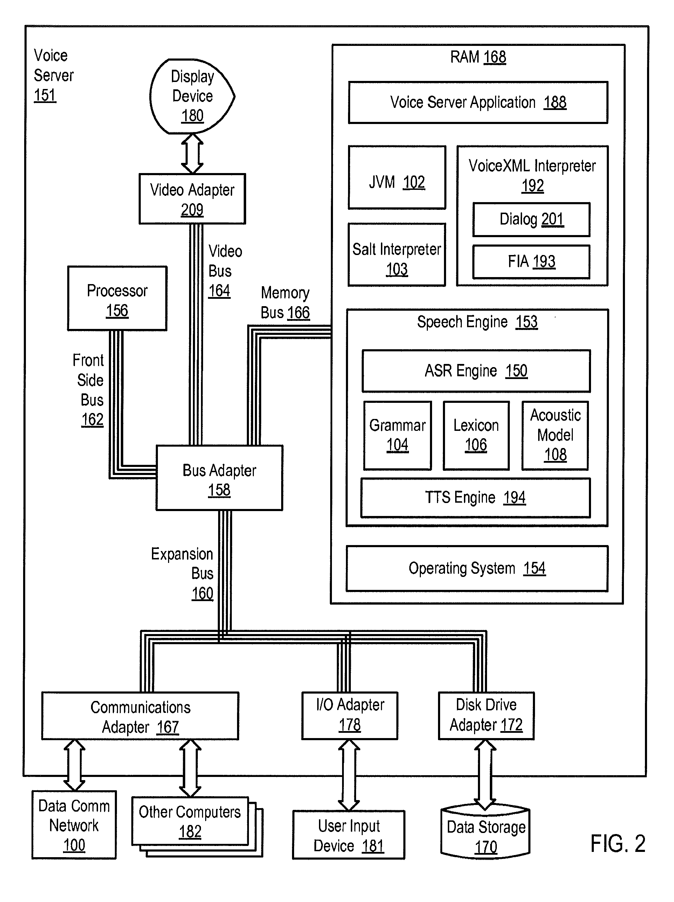

Presenting supplemental content for digital media using a multimodal application according to embodiments of the present invention in a thin client architecture may be implemented with one or more voice servers, computers, that is, automated computing machinery, that provide speech recognition and speech synthesis. For further explanation, therefore, Figure 2 sets forth a block diagram of automated computing machinery comprising an example of a computer useful as a voice server (151) in presenting supplemental content for digital media using a multimodal application according to embodiments of the present invention. The voice server (151) of Figure 2 includes at least one computer processor (156) or 'CPU' as well as random access memory (168) ('RAM') which is connected through a high speed memory bus (166) and bus adapter (158) to processor (156) and to other components of the voice server (151).

The voice server (151) of Figure 2 operates generally to support presenting supplemental content for digital media using a multimodal application according to embodiments of the present invention. Presenting supplemental content for digital media using a multimodal application according to embodiments of the present invention includes: rendering, by the multimodal application, a portion of the digital media; receiving, by the multimodal application, a voice utterance from a user; determining, by the multimodal application using an ASR engine (150), a recognition result in dependence upon the voice utterance and a grammar (104); identifying, by the multimodal application, supplemental content for the rendered portion of the digital media in dependence upon the recognition result; and rendering, by the multimodal application, the supplemental content.

Stored in RAM (168) is a voice server application (188), a module of computer program instructions capable of operating a voice server in a system that is configured to order recognition results produced by an ASR engine for a multimodal application according to embodiments of the present invention. Voice server application (188) provides voice recognition services for multimodal devices by accepting requests for speech recognition and returning speech recognition results, including text representing recognized speech, text for use as variable values in dialogs, and text as string representations of scripts for semantic interpretation. Voice server application (188) also includes computer program instructions that provide text-to-speech ('TTS') conversion for voice prompts and voice responses to user input in multimodal applications such as, for example, X+V applications, SALT applications, or Java Speech applications.

Voice server application (188) may be implemented as a web server, implemented in Java, C++, or another language, that supports X+V, SALT, VoiceXML, or other multimodal languages, by providing responses to HTTP requests from X+V clients, SALT clients, Java Speech clients, or other multimodal clients. Voice server application (188) may, for a further example, be implemented as a Java server that runs on a Java Virtual Machine (102) and supports a Java voice framework by providing responses to HTTP requests from Java client applications running on multimodal devices. And voice server applications that support automatic speech recognition may be implemented in other ways as may occur to those of skill in the art, and all such ways are well within the scope of the present invention.

The voice server (151) in this example includes a speech engine (153). The speech engine is a functional module, typically a software module, although it may include specialized hardware also, that does the work of recognizing and synthesizing human speech. The speech engine (153) includes an automated speech recognition ('ASR') engine (150) for speech recognition and a text-to-speech ('TTS') engine (194) for generating speech. The speech engine (153) also includes a grammar (104), a lexicon (106), and a language-specific acoustic model (108). The language-specific acoustic model (108) is a data structure, a table or database, for example, that associates Speech Feature Vectors with phonemes representing, to the extent that it is practically feasible to do so, all pronunciations of all the words in a human language. The lexicon (106) is an association of words in text form with phonemes representing pronunciations of each word; the lexicon effectively identifies words that are capable of recognition by an ASR engine. Also stored in RAM (168) is a Text To Speech ('TTS') Engine (194), a module of computer program instructions that accepts text as input and returns the same text in the form of digitally encoded speech, for use in providing speech as prompts for and responses to users of multimodal systems.

The voice server application (188) in this example is configured to receive, from a multimodal client located remotely across a network from the voice server, digitized speech for recognition from a user and pass the speech along to the ASR engine (150) for recognition. ASR engine (150) is a module of computer program instructions, also stored in RAM in this example. In carrying out presenting supplemental content for digital media using a multimodal application, the ASR engine (150) receives speech for recognition in the form of at least one digitized word and uses frequency components of the digitized word to derive a Speech Feature Vector ('SFV'). An SFV may be defined, for example, by the first twelve or thirteen Fourier or frequency domain components of a sample of digitized speech. The ASR engine can use the SFV to infer phonemes for the word from the language-specific acoustic model (108). The ASR engine then uses the phonemes to find the word in the lexicon (106).

In the example of Figure 2, the voice server application (188) passes the speech along to the ASR engine (150) for recognition through either Java Virtual Machine ('JVM') (102), a VoiceXML interpreter (192), or a SALT interpreter (103), depending on whether the multimodal application is implemented in X+V, Java, or SALT. The VoiceXML interpreter (192) is a software module of computer program instructions that accepts voice dialogs (201) from a multimodal application running remotely on a multimodal device. The dialogs (201) include dialog instructions, typically implemented in the form of a VoiceXML <form> element. The voice dialog instructions include one or more grammars, data input elements, event handlers, and so on, that advise the VoiceXML interpreter (192) how to administer voice input from a user and voice prompts and responses to be presented to a user. The VoiceXML interpreter (192) administers such dialogs by processing the dialog instructions sequentially in accordance with a VoiceXML Form Interpretation Algorithm ('FIA') (193).

Also stored in RAM (168) is an operating system (154). Operating systems useful in voice servers according to embodiments of the present invention include UNIX_{™}, Linux_{™}, Microsoft NT_{™}, IBM's AIX_{™}, IBM's i5/OS_{™}, and others as will occur to those of skill in the art. Operating system (154), voice server application (188), VoiceXML interpreter (192), speech engine (153), including ASR engine (150), and TTS Engine (194) in the example of Figure 2 are shown in RAM (168), but many components of such software typically are stored in non-volatile memory also, for example, on a disk drive (170).

Voice server (151) of Figure 2 includes bus adapter (158), a computer hardware component that contains drive electronics for high speed buses, the front side bus (162), the video bus (164), and the memory bus (166), as well as drive electronics for the slower expansion bus (160). Examples of bus adapters useful in voice servers according to embodiments of the present invention include the Intel Northbridge, the Intel Memory Controller Hub, the Intel Southbridge, and the Intel I/O Controller Hub. Examples of expansion buses useful in voice servers according to embodiments of the present invention include Industry Standard Architecture ('ISA') buses and Peripheral Component Interconnect ('PCI') buses.

Voice server (151) of Figure 2 includes disk drive adapter (172) coupled through expansion bus (160) and bus adapter (158) to processor (156) and other components of the voice server (151). Disk drive adapter (172) connects non-volatile data storage to the voice server (151) in the form of disk drive (170). Disk drive adapters useful in voice servers include Integrated Drive Electronics ('IDE') adapters, Small Computer System Interface ('SCSI') adapters, and others as will occur to those of skill in the art. In addition, non-volatile computer memory may be implemented for a voice server as an optical disk drive, electrically erasable programmable read-only memory (so-called 'EEPROM' or 'Flash' memory), RAM drives, and so on, as will occur to those of skill in the art.

The example voice server of Figure 2 includes one or more input/output ('I/O') adapters (178). I/O adapters in voice servers implement user-oriented input/output through, for example, software drivers and computer hardware for controlling output to display devices such as computer display screens, as well as user input from user input devices (181) such as keyboards and mice. The example voice server of Figure 2 includes a video adapter (209), which is an example of an I/O adapter specially designed for graphic output to a display device (180) such as a display screen or computer monitor. Video adapter (209) is connected to processor (156) through a high speed video bus (164), bus adapter (158), and the front side bus (162), which is also a high speed bus.

The exemplary voice server (151) of Figure 2 includes a communications adapter (167) for data communications with other computers (182) and for data communications with a data communications network (100). Such data communications may be carried out serially through RS-232 connections, through external buses such as a Universal Serial Bus ('USB'), through data communications data communications networks such as IP data communications networks, and in other ways as will occur to those of skill in the art. Communications adapters implement the hardware level of data communications through which one computer sends data communications to another computer, directly or through a data communications network. Examples of communications adapters useful for presenting supplemental content for digital media using a multimodal application according to embodiments of the present invention include modems for wired dial-up communications, Ethernet (IEEE 802.3) adapters for wired data communications network communications, and 802.11 adapters for wireless data communications network communications.

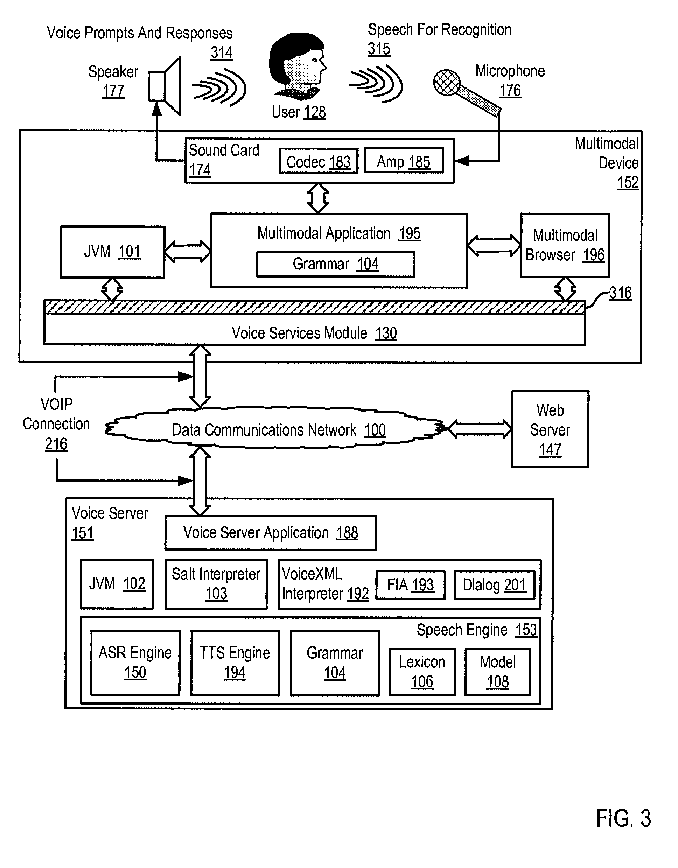

For further explanation, Figure 3 sets forth a functional block diagram of exemplary system for presenting supplemental content for digital media using a multimodal application of a multimodal application in a thin client architecture according to embodiments of the present invention. The example of Figure 3 includes a multimodal device (152) and a voice server (151) connected for data communication by a VOIP connection (216) through a data communications network (100). A multimodal application (195) operates in a multimodal browser (196) on the multimodal device (152), and a voice server application (188) operates on the voice server (151). The multimodal application (195) may be a set or sequence of one or more X+V pages that execute in the multimodal browser (196). The multimodal client application (195) may be a set or sequence of X+V or SALT documents that execute on multimodal browser (196), a Java voice application that executes on the Java Virtual Machine (101), or a multimodal application implemented in other technologies as may occur to those of skill in the art.

The multimodal device (152) supports multiple modes of interaction including a voice mode and one or more non-voice modes. The example multimodal device (152) of Figure 3 also supports voice with a sound card (174), which is an example of an I/O adapter specially designed for accepting analog audio signals from a microphone (176) and converting the audio analog signals to digital form for further processing by a codec (183). The example multimodal device (152) of Figure 3 may support non-voice modes of user interaction with keyboard input, mouseclicks, a graphical user interface ('GUI'), and so on, as will occur to those of skill in the art.

In addition to the multimodal sever application (188), the voice server (151) also has installed upon it a speech engine (153) with an ASR engine (150), a grammar (104), a lexicon (106), a language-specific acoustic model (108), and a TTS engine (194), as well as a Voice XML interpreter (192) that includes a form interpretation algorithm (193) and a SALT interpreter (103). The VoiceXML interpreter (192) interprets and executes VoiceXML dialog (201) received from the multimodal application (195) and provided to VoiceXML interpreter (192) through voice server application (188). VoiceXML input to VoiceXML interpreter (192) may originate from the multimodal application (195) implemented as an X+V client running remotely in a multimodal browser (196) on the multimodal device (152). The VoiceXML interpreter (192) administers such dialogs by processing the dialog instructions sequentially in accordance with a VoiceXML Form Interpretation Algorithm ('FIA') (193).

VOIP stands for 'Voice Over Internet Protocol,' a generic term for routing speech over an IP-based data communications network. The speech data flows over a general-purpose packet-switched data communications network, instead of traditional dedicated, circuit-switched voice transmission lines. Protocols used to carry voice signals over the IP data communications network are commonly referred to as 'Voice over IP' or 'VOIP' protocols. VOIP traffic may be deployed on any IP data communications network, including data communications networks lacking a connection to the rest of the Internet, for instance on a private building-wide local area data communications network or 'LAN.'

Many protocols are used to effect VOIP. The two most popular types of VOIP are effected with the IETF's Session Initiation Protocol ('SIP') and the ITU's protocol known as 'H.323.' SIP clients use TCP and UDP port 5060 to connect to SIP servers. SIP itself is used to set up and tear down calls for speech transmission. VOIP with SIP then uses RTP for transmitting the actual encoded speech. Similarly, H.323 is an umbrella recommendation from the standards branch of the International Telecommunications Union that defines protocols to provide audio-visual communication sessions on any packet data communications network.

The system of Figure 3 operates generally for presenting supplemental content for digital media using a multimodal application according to embodiments of the present invention. Presenting supplemental content for digital media (105) using a multimodal application according to embodiments of the present invention includes: rendering, by the multimodal application (195), a portion of the digital media (105); receiving, by the multimodal application (195), a voice utterance from a user; determining, by the multimodal application (195) using the ASR engine (150), a recognition result in dependence upon the voice utterance and a grammar (104); identifying, by the multimodal application (195), supplemental content for the rendered portion of the digital media (105) in dependence upon the recognition result; and rendering, by the multimodal application, the supplemental content.

The system of Figure 3 operates in a manner that is similar to the operation of the system of Figure 2 described above. Multimodal application (195) is a user-level, multimodal, client-side computer program that presents a voice interface to user (128), provides audio prompts and responses (314) and accepts input speech for recognition (315). Multimodal application (195) provides a speech interface through which a user may provide oral speech for recognition through microphone (176) and have the speech digitized through an audio amplifier (185) and a coder/decoder ('codec') (183) of a sound card (174) and provide the digitized speech for recognition to ASR engine (150). Multimodal application (195), through the multimodal browser (196) or JVM (101), an API (316), and a voice services module (130), then packages the digitized speech in a recognition request message according to a VOIP protocol, and transmits the speech to voice server (151) through the VOIP connection (216) on the network (100). As noted above, the multimedia device application (195) also may be implemented as a Java client application running remotely on the multimedia device (152), a SALT application running remotely on the multimedia device (152), and in other ways as may occur to those of skill in the art.

Voice server application (188) of Figure 3 provides voice recognition services for multimodal devices by accepting dialog instructions, VoiceXML segments, and returning speech recognition results, including text representing recognized speech, text for use as variable values in dialogs, and output from execution of semantic interpretation scripts - as well as voice prompts. Voice server application (188) includes computer program instructions that provide text-to-speech ('TTS') conversion for voice prompts and voice responses to user input in multimodal applications providing responses to HTTP requests from multimodal browsers running on multimodal devices.

The voice server application (188) receives speech for recognition from a user and passes the speech through API calls to VoiceXML interpreter (192) which in turn uses an ASR engine (150) for speech recognition. The ASR engine receives digitized speech for recognition, uses frequency components of the digitized speech to derive an SFV, uses the SFV to infer phonemes for the word from the language-specific acoustic model (108), and uses the phonemes to find the speech in the lexicon (106). The ASR engine then compares speech found as words in the lexicon to words in a grammar (104) to determine whether words or phrases in speech are recognized by the ASR engine.

The multimodal application (195) is operatively coupled to the ASR engine (150). In this example, the operative coupling between the multimodal application and the ASR engine (150) is implemented with a VOIP connection (216) through a voice services module (130), then through the voice server application (188) and either JVM (102), VoiceXML interpreter (192), or SALT interpreter (103), depending on whether the multimodal application is implemented in X+V, Java, or SALT. The voice services module (130) is a thin layer of functionality, a module of computer program instructions, that presents an API (316) for use by an application level program in providing dialog instructions and speech for recognition to a voice server application (188) and receiving in response voice prompts and other responses. In this example, application level programs are represented by multimodal application (195), JVM (101), and multimodal browser (196).

In the example of Figure 3, the voice services module (130) provides data communications services through the VOIP connection and the voice server application (188) between the multimodal device (152) and the VoiceXML interpreter (192). The API (316) is the same API presented to applications by a VoiceXML interpreter (192) or a SALT interpreter (103) when such an interpreter is installed on the multimodal device in a thick client architecture. So from the point of view of an application calling the API (316), the application is calling the VoiceXML interpreter or SALT interpreter directly. The data communications functions of the voice services module (130) are transparent to applications that call the API (316). At the application level, calls to the API (316) may be issued from the multimodal browser (196), which provides an execution environment for the multimodal application (195) when the multimodal application is implemented with X+V or SALT. And calls to the API (316) may be issued from the JVM (101), which provides an execution environment for the multimodal application (195) when the multimodal application is implemented with Java.

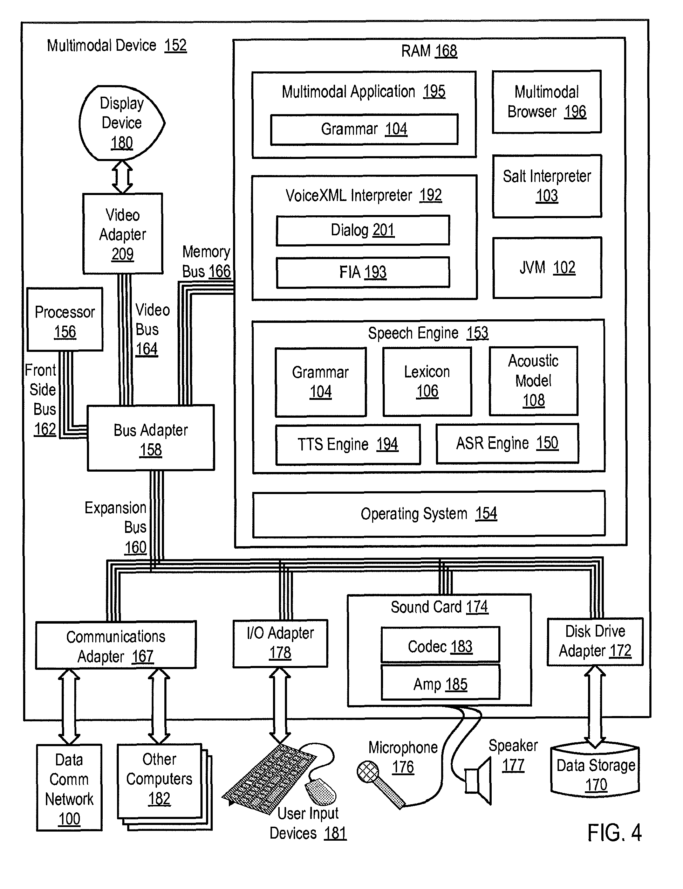

Presenting supplemental content for digital media using a multimodal application of a multimodal application according to embodiments of the present invention in thick client architectures is generally implemented with multimodal devices, that is, automated computing machinery or computers. In the system of Figure 1, for example, all the multimodal devices (152) are implemented to some extent at least as computers. For further explanation, therefore, Figure 4 sets forth a block diagram of automated computing machinery comprising an example of a computer useful as a multimodal device (152) in presenting supplemental content for digital media using a multimodal application of a multimodal application according to embodiments of the present invention. In a multimodal device implementing a thick client architecture as illustrated in Figure 4, the multimodal device (152) has no connection to a remote voice server containing a VoiceXML interpreter and a speech engine. Rather, all the components needed for speech synthesis and voice recognition in presenting supplemental content for digital media using a multimodal application according to embodiments of the present invention are installed or embedded-in the multimodal device itself.

The exemplary multimodal device (152) of Figure 4 operates generally for presenting supplemental content for digital media using a multimodal application according to embodiments of the present invention. Presenting supplemental content for digital media (105) using a multimodal application according to embodiments of the present invention includes: rendering, by the multimodal application (195), a portion of the digital media (105); receiving, by the multimodal application (195), a voice utterance from a user; determining, by the multimodal application (195) using the ASR engine (150), a recognition result in dependence upon the voice utterance and a grammar (104); identifying, by the multimodal application (195), supplemental content for the rendered portion of the digital media (105) in dependence upon the recognition result; and rendering, by the multimodal application, the supplemental content.

The example multimodal device (152) of Figure 4 includes several components that are structured and operate similarly as do parallel components of the voice server, having the same drawing reference numbers, as described above with reference to Figure 2: at least one computer processor (156), frontside bus (162), RAM (168), high speed memory bus (166), bus adapter (158), video adapter (209), video bus (164), expansion bus (160), communications adapter (167), I/O adapter (178), disk drive adapter (172), an operating system (154), a JVM (102), a SALT interpreter (103), a VoiceXML Interpreter (192), a speech engine (153), and so on. As in the system of Figure 2, the speech engine in the multimodal device of Figure 4 includes an ASR engine (150), a grammar (104), a lexicon (106), a language-dependent acoustic model (108), and a TTS engine (194). The VoiceXML interpreter (192) administers dialogs (201) by processing the dialog instructions sequentially in accordance with a VoiceXML Form Interpretation Algorithm ('FIA') (193).

The speech engine (153) in this kind of embodiment, a thick client architecture, often is implemented as an embedded module in a small form factor device such as a handheld device, a mobile phone, PDA, and the like. An example of an embedded speech engine useful for presenting supplemental content for digital media using a multimodal application according to embodiments of the present invention is IBM's Embedded ViaVoice Enterprise. The example multimodal device of Figure 4 also includes a sound card (174), which is an example of an I/O adapter specially designed for accepting analog audio signals from a microphone (176) and converting the audio analog signals to digital form for further processing by a codec (183). The sound card (174) is connected to processor (156) through expansion bus (160), bus adapter (158), and front side bus (162).

Also stored in RAM (168) in this example is a multimodal application (195), a module of computer program instructions capable of operating a multimodal device as an apparatus that supports presenting supplemental content for digital media using a multimodal application according to embodiments of the present invention. The multimodal application (195) implements speech recognition by accepting speech utterances for recognition from a user and sending the utterance for recognition through API calls to the ASR engine (150). The multimodal application (195) implements speech synthesis generally by sending words to be used as prompts for a user to the TTS engine (194). As an example of thick client architecture, the multimodal application (195) in this example does not send speech for recognition across a network to a voice server for recognition, and the multimodal application (195) in this example does not receive synthesized speech, TTS prompts and responses, across a network from a voice server. All grammar processing, voice recognition, and text to speech conversion in this example is performed in an embedded fashion in the multimodal device (152) itself.

More particularly, multimodal application (195) in this example is a user-level, multimodal, client-side computer program that provides a speech interface through which a user may provide oral speech for recognition through microphone (176), have the speech digitized through an audio amplifier (185) and a coder/decoder ('codec') (183) of a sound card (174) and provide the digitized speech for recognition to ASR engine (150). The multimodal application (195) may be implemented as a set or sequence of X+V pages executing in a multimodal browser (196) or microbrowser that passes VoiceXML grammars and digitized speech by calls through a VoiceXML interpreter API directly to an embedded VoiceXML interpreter (192) for processing. The embedded VoiceXML interpreter (192) may in turn issue requests for speech recognition through API calls directly to the embedded ASR engine (150). The embedded VoiceXML interpreter (192) may then issue requests to the action classifier (132) to determine an action identifier in dependence upon the recognized result provided by the ASR engine (150). Multimodal application (195) also can provide speech synthesis, TTS conversion, by API calls to the embedded TTS engine (194) for voice prompts and voice responses to user input.

In a further class of exemplary embodiments, the multimodal application (195) may be implemented as a Java voice application that executes on Java Virtual Machine (102) and issues calls through an API exposed by the VoiceXML interpreter (192) for speech recognition and speech synthesis services. In further exemplary embodiments, the multimodal application (195) may be implemented as a set or sequence of SALT documents executed on a multimodal browser (196) or microbrowser that issues calls through an API exposed by the SALT interpreter (103) for speech recognition and speech synthesis services. In addition to X+V, SALT, and Java implementations, multimodal application (195) may be implemented in other technologies as will occur to those of skill in the art, and all such implementations are well within the scope of the present invention.

The multimodal application (195) is operatively coupled to the ASR engine (150). In this example, the operative coupling between the multimodal application and the ASR engine (150) is implemented with either the JVM (102), VoiceXML interpreter (192), or SALT interpreter (103), depending on whether the multimodal application is implemented in X+V, Java, or SALT. When the multimodal application (195) is implemented in X+V, the operative coupling is effected through the multimodal browser (196), which provides an operating environment and an interpreter for the X+V application, and then through the VoiceXML interpreter, which passes grammars and voice utterances for recognition to the ASR engine. When the multimodal application (195) is implemented in Java Speech, the operative coupling is effected through the JVM (102), which provides an operating environment for the Java application and passes grammars and voice utterances for recognition to the ASR engine. When the multimodal application (195) is implemented in SALT, the operative coupling is effected through the multimodal browser (196), which provides an operating environment and an interpreter for the SALT application, and then through the SALT interpreter (103), which provides an operating environment and an interpreter for the SALT application and passes grammars and voice utterances for recognition to the ASR engine.

The multimodal application (195) in this example, operating on a multimodal device (152) that contains its own VoiceXML interpreter (192) and its own speech engine (153) with no network or VOIP connection to a remote voice server containing a remote VoiceXML interpreter or a remote speech engine, is an example of a so-called 'thick client architecture,' so-called because all of the functionality for processing voice mode interactions between a user and the multimodal application - as well as all or most of the functionality for presenting supplemental content for digital media using a multimodal application of a multimodal application according to embodiments of the present invention - is implemented on the multimodal device itself.

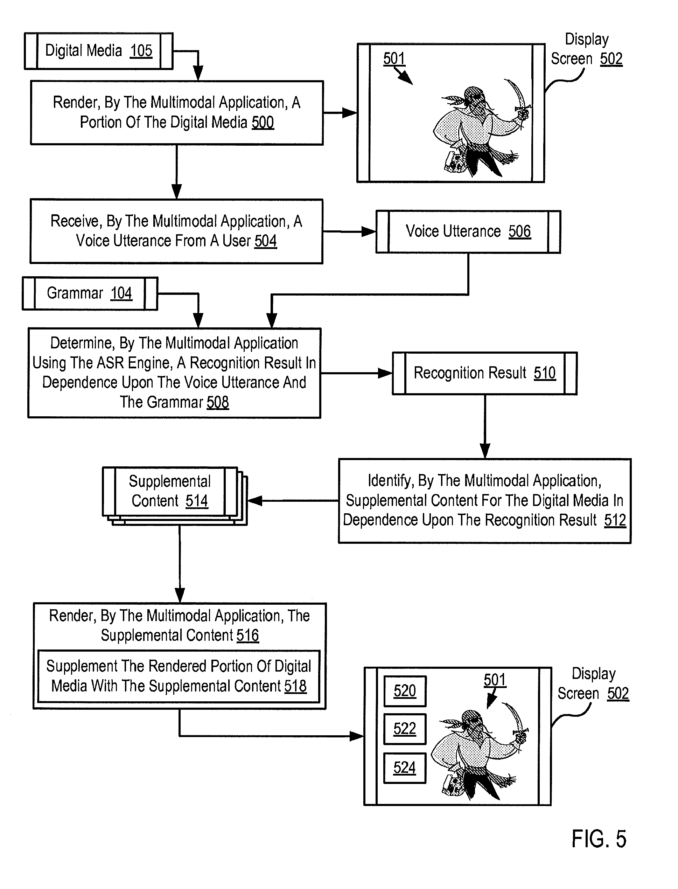

For further explanation, Figure 5 sets forth a flow chart illustrating an exemplary method of presenting supplemental content for digital media using a multimodal application of a multimodal application according to embodiments of the present invention. Presenting supplemental content for digital media using a multimodal application in this example is implemented with a multimodal application. The multimodal application may be implemented using Java, SALT, X+V, or any other multimodal language as will occur to those of skill in the art. The multimodal application operates on a multimodal device supporting multiple modes of interaction including a voice mode and one or more non-voice modes of user interaction with the multimodal application. The voice mode may be implemented in this example with audio output through a speaker and audio input through a microphone. Non-voice modes may be implemented by user input devices such as, for example, a keyboard and a mouse.

The multimodal application is operatively coupled to an ASR engine. The operative coupling provides a data communications path from the multimodal application to the ASR engine for grammars, speech for recognition, and other input. The operative coupling also provides a data communications path from the ASR engine to the multimodal application for recognized speech, semantic interpretation results, and other results. When the multimodal application is implemented in a thick client architecture, the operative coupling between the multimodal application and the ASR engine may be implemented through either a JVM (102 on Figure 4), VoiceXML interpreter (192 on Figure 4), or SALT interpreter (103on Figure 4), depending on whether the multimodal application is implemented in X+V, Java, or SALT. When the multimodal application is implemented in a thin client architecture, the operative coupling between the multimodal application and the ASR engine may be implemented with a VOIP connection (216 on Figure 3) through a voice services module (130 on Figure 3), then through the voice server application (188 on Figure 3) and either JVM (102 on Figure 3), VoiceXML interpreter (192 on Figure 3), or SALT interpreter (103 on Figure 3), depending on whether the multimodal application is implemented in X+V, Java, or SALT.

The digital media (105) of Figure 5 is a set of digital codes representing content for rendering to a user. The content stored in the digital media (105) of Figure 5 may include video, audio tracks, presentations, or other content as will occur to those of skill in the art. The digital media (105) may also store other data that may or may not be rendered to a user. Other data stored in the digital media (105) may include meta-data describing the content, additional data regarding the content, formatting data for the content, and any other data as will occur to those of skill in the art.

In the example of Figure 5, digital media (105) is implemented as a digital video. A digital video is a collection of frames typically used to create the illusion of a moving picture. The digital video may implement a television show, a movie, a commercial, other content, or data associated with such other content. Each frame of the digital video is image data for rendering one still image and metadata associated with the image data. The metadata of each frame may include synchronization data for synchronizing the frame with an audio stream, configurational data for devices displaying the frame, digital video text data for displaying textual representations of the audio associated with the frame, and so on.

In the example of Figure 5, the digital media (105) is annotated by the producers of the digital media (105). Annotated content may include content that describes portions of the digital media (105) or provides additional information regarding portions of the digital media (105). For example, annotated content may be implemented as a set of keywords that describe a particular scene in a digital video or implemented as additional information regarding the clothing of a character in a digital video. A producer may annotate the digital media by storing annotated content in a channel of the digital media (105) dedicated to storing annotated content. Such an implementation may be similar to the mechanism used to store closed-captioning in digital video. In other embodiments, the producer may annotate the digital media (105) by storing the annotated content in a content repository (not shown) rather than in a channel of the digital media (105). The annotated content stored in such a content repository may be associated with various portions of the digital media using, for example, time stamps, frame numbers, or any other mechanism for associating the annotated content to portions of the digital media as will occur to those of skill in the art.

The method of Figure 5 includes rendering (500), by the multimodal application, a portion of the digital media (105). The multimodal application may render (500) a portion of the digital media (105) according to the method of Figure 5 by calling a function that displays a portion of the digital media (105) on a display screen (502) of the multimodal device. For further explanation, consider the following segment of an exemplary multimodal application implemented using X+V:

```
 <body>
 ...
 <script language="JavaScript" type"text/javascript">
 display.RenderMedia(mediaID);
 </script>
 ...
 </body>
```

In the segment above of an exemplary multimodal application, the multimodal application includes a JavaScript segment that calls a function 'RenderMedia' of a JavaScript object 'display.' The 'display' object provides an interface to the multimodal application for utilizing the display screen (502) of the multimodal device. The 'RenderMedia' function renders the digital media specified by the 'mediaID' variable on the display screen (502). The 'mediaID' variable may specify the digital media using a uniform resource identifier ('URI'), an identifier in a file system namespace, or any other identifier as will occur to those of skill in the art.

In the example of Figure 5, the display screen (502) displays each frame of the digital media (105). In the terminology of this specification, displaying a frame refers to rendering image data of the frame on the display screen along with any metadata of the frame encoded for display such as, for example, closed captioning text. The display screen (502) displays the digital media (105) by flashing each frame on the display screen (502) for a brief period of time, typically 1/24th, 1/25th or 1/30th of a second, and then immediately replacing the frame displayed on the display screen with the next frame. As a person views the display screen (502), persistence of vision in the human eye blends the displayed frames together to produce the illusion of a moving image.

Using the display screen (502) of Figure 5, the multimodal application renders portion (501) of the digital media (105). In the example of Figure 5, digital media (105) is implemented as a digital video about the life of a pirate. Readers will note that such a digital video is for explanation only and not for limitation. The portion (501) of the digital media (105) rendered on display screen (502) consists of a scene in the digital video in which the pirate find a map. As the multimodal application renders portion (501) of the digital media (105) in the example of Figure 5, the multimodal device continues to accept user input via its multiple modalities.

The method of Figure 5 includes receiving (504), by the multimodal application, a voice utterance (506) from a user. The voice utterance (506) of Figure 5 represents digitized human speech provided to the multimodal application by a user of a multimodal device. The multimodal application (195) may receive (504) a voice utterance (506) from a user according to the method of Figure 5 by acquiring speech from a user through a microphone and encoding the voice utterance in a suitable format for storage and transmission using any CODEC as will occur to those of skill in the art.

Presenting supplemental content for digital media using a multimodal application according to the method of Figure 5 is implemented with the grammar (104) of the multimodal application in an ASR engine. Through the operative coupling between the multimodal application and the ASR engine, the multimodal application may provide the grammar (104) to the ASR engine. The multimodal application implemented using X+V may specify the grammar (104) using the VoiceXML <grammar> element as follows:

```
 <grammar src="grammar.le"/>
```

The source attribute 'src' specifics the URI of the definition of the exemplary grammar. Although the above example illustrates how a grammar may be referenced externally, a grammar's definition may also be expressed in-line in an X+V page.

In the exemplary system of Figure 5, the grammar (104) includes grammar rules that specify recognition results according to the supplemental content for the rendered portion of the digital media (105). That is, the grammar rules of the grammar (104) specify words and phrases for recognition of user requests for supplemental content. Grammars typically operate as elements of dialogs, such as, for example, a VoiceXML <menu> or an X+V <form>. A grammar's definition may be expressed in-line in a dialog. Or the grammar may be implemented externally in a separate grammar document and referenced from with a dialog with a URI. Here is an example of a grammar expressed in JSFG includes grammar rules that specify recognition results according to supplemental content:

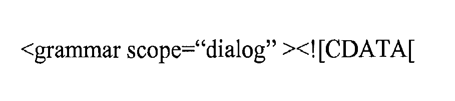

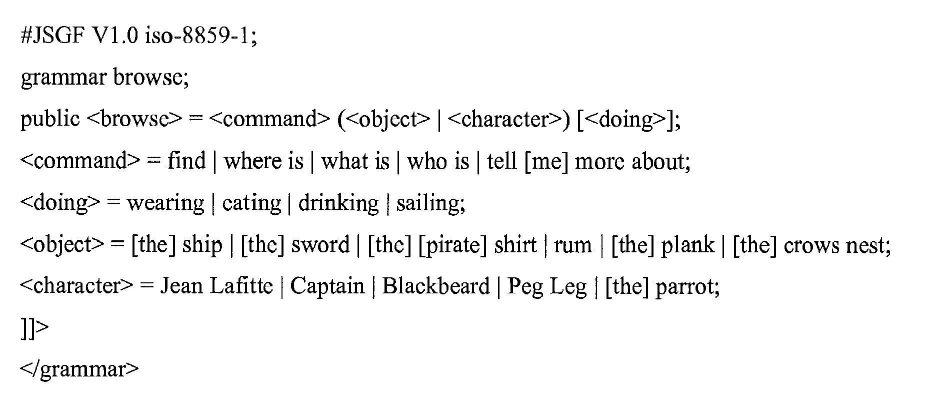

In this example, the elements named <browse>, <command>, <doing>, <object>, and <character> are rules of the grammar. Rules are a combination of a rulename and an expansion of a rule that advises an ASR engine which words presently can be recognized. In the example above, rule expansions includes conjunction and disjunction, and the vertical bars '|' mean 'or.' An ASR engine processes the rules in sequence, first <browse>, then <command>, then <doing>, then <object>, and then <character>. The <browse> rule accepts for recognition whatever is returned from the <command> rule along with whatever is returned from the <object> rule or the <character> rule, and optionally whatever is returned from the <doing> rule. The browse grammar as a whole matches utterances like these, for example:
- "Find the parrot"
- "Who is Jean Lafitte"
- "Tell me more about the map"
- "Where is the Captain sailing"

The exemplary grammar rules above specify recognition results according to supplemental content because the rule expansions for <object> and <character> rules contain annotated content in the form of keywords that may be embedded into the pirate movie by its producers using meta-data tags. Using software, these embedded keywords may be extracted from the digital video and converted into the exemplary grammar above. In some embodiments, however, the keywords for the various scenes in the pirate movie may be contained in a content repository rather than embedded in the digital video.

The method of Figure 5 includes determining (508), by the multimodal application using the ASR engine, a recognition result (510) in dependence upon the voice utterance (506) and the grammar (104). The multimodal application may determine (508) a recognition result (510) according to the method of Figure 5 by passing the voice utterance (502) and the grammar (104) to an ASR engine for speech recognition and receiving the recognition result (510) from the ASR engine. In a thin client architecture, the multimodal application may pass the voice utterance (502) and the grammar (104) to an ASR engine through a voice services module (130 on Figure 3) operating on the multimodal device. The voice services module, in turn, passes the voice utterance (502) and the grammar (104) through a VOIP connection (216 on Figure 3) to a voice server application (188 on Figure 3) and then to the ASR engine through a JVM, SALT interpreter, or a VoiceXML interpreter, depending on whether the multimodal application is implemented using Java, SALT, or X+V. In a thick client architecture, the multimodal application may pass the voice utterance (502) and the grammar (104) to an ASR engine through a JVM, SALT interpreter, or a VoiceXML interpreter, depending on whether the multimodal application is implemented using Java, SALT, or X+V.

When the multimodal application is implemented in X+V, the recognition results may be stored in an ECMAScript data structure such as, for example, the application variable array 'application.lastresult$' some other field variable array for a field specified by the X+V page. ECMAScript data structures represent objects in the Document Object Model ('DOM') at the scripting level in an X+V page. The DOM is created by a multimodal browser when the X+V page of the multimodal application is loaded. The 'application.lastresult$' array holds information about the last recognition generated by an ASR engine for the multimodal application. The 'application.lastresult$' is an array of elements where each element, application.lastresult$[i], represents a possible result through the following shadow variables:
- application.lastresult$[i].confidence, which specifies the confidence level for this recognition result. A value of 0.0 indicates minimum confidence, and a value of 1.0 indicates maximum confidence.
- application.lastresult$[i].utterance, which is the raw string of words that compose this recognition result. The exact tokenization and spelling is platform-specific (e.g. "five hundred thirty" or "5 hundred 30" or even "530").
- application.lastresult$[i].inputmode, which specifies the mode in which the user provided the voice utterance. Typically, the value is voice for a voice utterance.
- application.lastresult$[i].interpretation, which is an ECMAScript variable containing output from ECMAScript post-processing script typically used to reformat the value contained in the 'utterance' shadow variable.

When the multimodal application is implemented in X+V, the recognition result (510) may also be stored in field variable array using shadow variables similar to the application variable 'application.lastresult$.' For example, a field variable array may represent a possible recognition result through the following shadow variables:
- *name*$[i].confidence,
- *name*$[i].utterance,
- *name*$[i].inputmode, and
- *name*$[i].interpretation,
where '*name*$' is a placeholder for the field identifier for a field in the multimodal application specified to store the results of the recognition result (510).

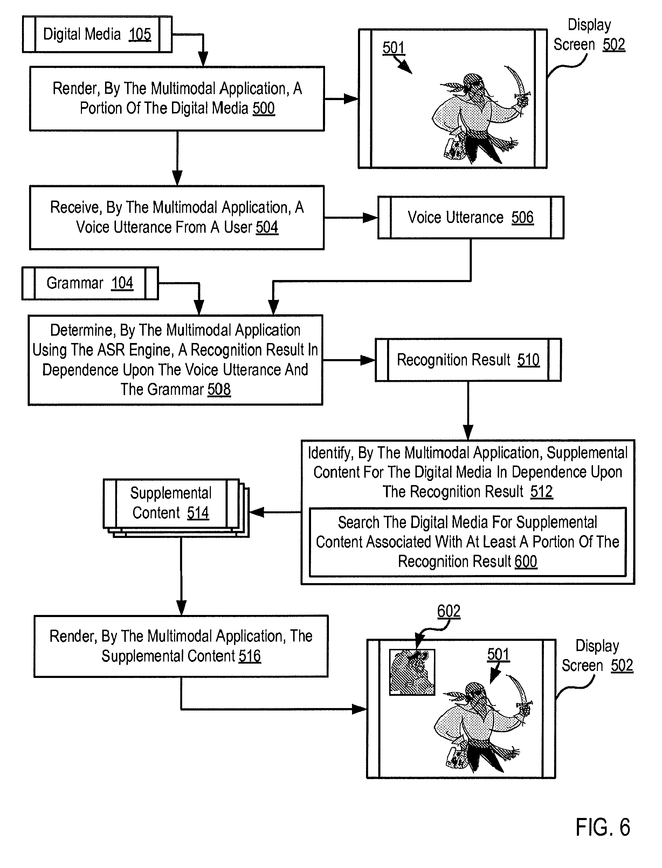

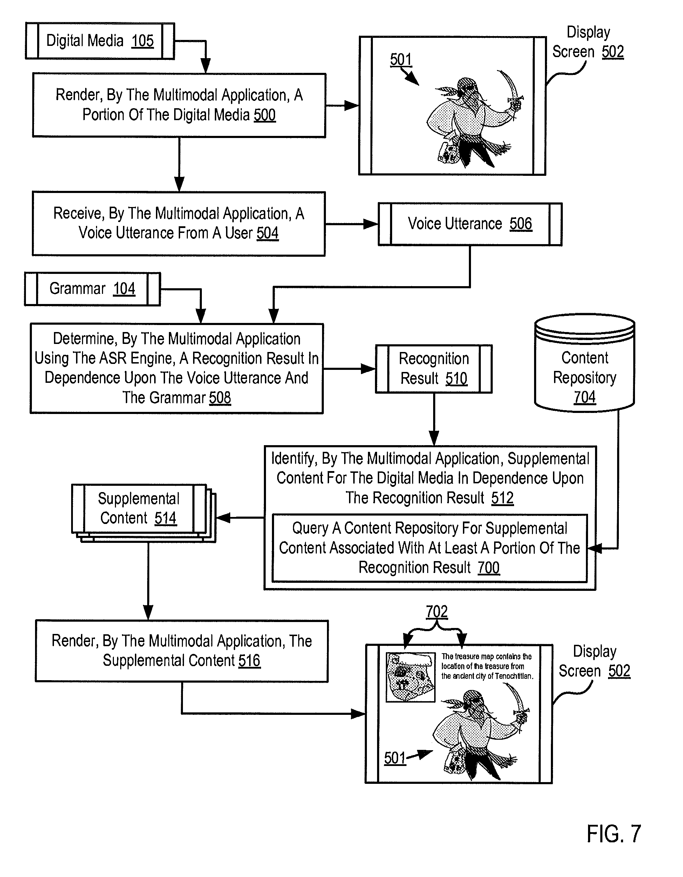

The method of Figure 5 also includes identifying (512), by the multimodal application, supplemental content (514) for the rendered portion of the digital media (105) in dependence upon the recognition result (510). The multimodal application may identify (512) supplemental content (514) for the rendered portion of the digital media according to the method of Figure 5 by searching the digital media (105) for supplemental content (514) associated with at least a portion of the recognition result (510) or querying a content repository for supplemental content (514) associated with at least a portion of the recognition result (510) as discussed below with reference to Figures 6 and 7.

In the example of Figure 5, the supplemental content (514) represents content that supplements the content provided to the user when the multimodal application renders a portion of the digital media (105). The supplement content may include annotated content for the digital media (105) such that the user is able to access the annotated content in addition to the portion of the digital media (105) currently being rendered. The supplement content may include another portion of the digital media (105) such that the user is able to access portions of the digital media (105) in addition to the portion of the digital media (105) currently being rendered. Supplemental content may be embedded in the digital media (105) itself. For example, when the supplemental content is implemented as another portion of the digital media (105) or as keyword tags in each frame of digital media (105), the supplemental content may be embedded in the digital media (105) itself. In addition to being embedded in the digital media (105), the supplemental content may be contained in a content repository. For example, when the portion of the digital media being rendered depicts a man wearing a jacket and the supplemental content is implemented as data describing where to purchase the jacket, the supplemental content may be contained in a content repository updated to indicate current stores that sell the jacket.

The method of Figure 5 includes rendering (516), by the multimodal application, the supplemental content (514). The multimodal application renders (516) the supplemental content (514) in the method of Figure 5 by supplementing (518) the rendered portion of digital media (105) with the supplemental content (514). The multimodal application may supplement (518) the rendered portion of digital media (105) with the supplemental content (514) according to the method of Figure 5 by calling a function that displays the supplemental content (514) on the display screen (502) along with portion (501) of the digital media (105) currently rendered on the display screen (502) of the multimodal device.

For further explanation, consider the following segment of an exemplary multimodal application implemented using X+V:

```
 <body>
 ...
 <script language="JavaScript" type="text/javascript">
 display.Supplement(SuppContentID, position);
 </script>
 ...
 </body>
```

In the segment above of an exemplary multimodal application, the multimodal application includes a JavaScript segment that calls a function 'Supplement' of a JavaScript object 'display.' The 'display' object provides an interface to the multimodal application for utilizing the display screen (502) of the multimodal device. The 'Supplement' function supplements the media currently displayed on the display screen (502) with the supplemental content specified by the 'SuppContentID' variable at the position on the display screen (502) specified by the 'position' data structure. When the supplemental content (514) is implemented as another portion of the digital media, the 'SuppContentID' variable may specify the supplemental content using a pointer to a data structure, a URI along with one or more timestamps to identify the other portion, an identifier in a file system namespace along with one or more timestamps to identify the other portion, or any other identifier as will occur to those of skill in the art. When the supplemental content (514) is implemented as annotated content, the `SuppContentID' variable may specify the supplemental content using a pointer to data structure, a URI, an identifier in a file system namespace, or any other identifier as will occur to those of skill in the art.

In the example of Figure 5, the multimodal application supplements (516) the rendered portion (501) of the digital media (105) with supplemental content (514) on the display screen (502). The multimodal application renders the supplemental content (514) in display regions (520, 522, 524). Readers will note that the display regions (520, 522, 524) illustrated in the example of Figure 5 are for explanation only and not for limitation.

Readers will further note that although rendering (516) the supplemental content (514) according to Figure 5 includes supplementing (518) the rendered portion of the digital media with the supplemental content (514), such an embodiment of rendering (516) the supplemental content (514) is for explanation. In other embodiments, rendering (516) the supplemental content (514) may be carried out by replacing the rendered portion of the digital media (105) on the display screen (502) with the supplemental content (514).

As mentioned above, a multimodal application may identify supplemental content for the rendered portion of the digital media by searching the digital media for supplemental content associated with at least a portion of the recognition result. For further explanation, therefore, Figure 6 sets forth a flow chart illustrating a further exemplary method of presenting supplemental content for digital media using a multimodal application of a multimodal application according to embodiments of the present invention that includes searching (600) the digital media (105) for supplemental content (514) associated with at least a portion of the recognition result (510).

Presenting supplemental content for digital media (105) using a multimodal application is implemented with a grammar (104) of the multimodal application in an ASR engine. The multimodal application in the example of Figure 6 operates on a multimodal device supporting multiple modes of interaction including a voice mode and one or more non-voice modes. The multimodal application is operatively coupled to the ASR engine.

The method of Figure 6 is similar to the method of Figure 5. That is, the method of Figure 6 includes: rendering (500), by the multimodal application, a portion of the digital media (105); receiving (504), by the multimodal application, a voice utterance (506) from a user; determining (508), by the multimodal application using the ASR engine, a recognition result (510) in dependence upon the voice utterance (506) and the grammar (104); identifying (512), by the multimodal application, supplemental content (514) for the rendered portion of the digital media in dependence upon the recognition result (510); and rendering (516), by the multimodal application, the supplemental content (514). In the example of Figure 6, the digital media (105) is implemented as digital video, and the portion (501) of the digital media (105) rendered by the multimodal application is displayed on a display screen (502) of the multimodal device.

In the method of Figure 6, identifying (512), by the multimodal application, supplemental content (514) for the rendered portion of the digital media in dependence upon the recognition result (510) includes searching (600) the digital media (105) for supplemental content (514) associated with at least a portion of the recognition result (510). Readers will recall that the supplemental content may be embedded in the digital media (105) itself because the supplemental content may be another portion of the digital media or annotated content stored in an out-of-band channel of the digital media. Such annotated content and other data may be stored in meta-data tags embedded in the digital media (105). The multimodal application may search (600) the digital media (105) for supplemental content (514) associated with at least a portion of the recognition result (510) according to the method of Figure 6 by parsing the recognition result (510) into one or more search terms and matching a search term to one or more meta-data tags embedded in the digital media (105). These meta-data tags may be associated with particular portions of the digital media (105) by virtue of the tags location in digital media (105). For example, meta-data tags that contain keywords of a scene in a digital video may be stored in each video frame of the scene.

The multimodal application may parse the recognition result (510) into one or more search terms using semantic interpretation scripts specified in the grammar (104). Semantic interpretation script are instructions embedded in the grammar (104) that are executed by a VoiceXML interpreter based on the recognition results matched by the ASR engine in the grammar (104). Semantic interpretation scripts operate to transform the recognition result (510) from the format matched by the ASR engine into a format more suitable for processing the multimodal application. Semantic interpretation scripts may be embedded in the grammar (104) according to the Semantic Interpretation for Speech Recognition ('SISR') specification promulgated by the W3C or any other semantic interpretation specification as will occur to those of skill in the art.

For further explanation of searching (600) the digital media (105) for supplemental content (514) associated with at least a portion of the recognition result (510), consider that an ASR engine returns the recognition result 'find the parrot' to the multimodal application. The multimodal application may parse the recognition result (510) into the search term 'parrot' and match the 'parrot' search tag with a meta-data tag 'parrot' embedded in one of the frames of the digital media (105) that depicts a parrot. The supplemental content (514) is then identified as the frame or sequence of frames in the digital media having the meta-data tag 'parrot.' In the example of Figure 6, the multimodal application renders (516) the supplemental content (514) in the display region (602) on the display screen (502) by displaying the frame in the digital media (105) having the meta-data tag 'parrot' along with the portion (501) of the digital media (105) being rendered by the multimodal application.

As mentioned above, a multimodal application may identify supplemental content for the rendered portion of the digital media by querying a content repository for supplemental content associated with at least a portion of the recognition result. For further explanation, therefore, Figure 7 sets forth a flow chart illustrating a further exemplary method of presenting supplemental content for digital media using a multimodal application of a multimodal application according to embodiments of the present invention that includes querying (700) a content repository (704) for supplemental content (514) associated with at least a portion of the recognition result (510).

Presenting supplemental content for digital media (105) using a multimodal application is implemented with a grammar (104) of the multimodal application in an ASR engine. The multimodal application in the example of Figure 7 operates on a multimodal device supporting multiple modes of interaction including a voice mode and one or more non-voice modes. The multimodal application is operatively coupled to the ASR engine.

The method of Figure 7 is similar to the method of Figure 5. That is, the method of Figure 7 includes: rendering (500), by the multimodal application, a portion of the digital media (105); receiving (504), by the multimodal application, a voice utterance (506) from a user; determining (508), by the multimodal application using the ASR engine, a recognition result (510) in dependence upon the voice utterance (506) and the grammar (104); identifying (512), by the multimodal application, supplemental content (514) for the rendered portion of the digital media in dependence upon the recognition result (510); and rendering (516), by the multimodal application, the supplemental content (514). In the example of Figure 7, the digital media (105) is implemented as digital video, and the portion (501) of the digital media (105) rendered by the multimodal application is displayed on a display screen (502) of the multimodal device.

In the method of Figure 7, identifying (512), by the multimodal application, supplemental content (514) for the rendered portion of the digital media in dependence upon the recognition result (510) includes querying (700) a content repository (704) for supplemental content (514) associated with at least a portion of the recognition result (510). The content repository (704) of Figure 7 is a data store that contains information describing the digital media (105), addition information related to the digital media (105), or other information as will occur to those of skill in the art. The content repository (704) may be implemented as a database, a XML document, or any other implementation as will occur to those of skill in the art. For example, consider the following exemplary content repository implemented in XML:

```
 <repository>
 ...
 <content id="map">
 <image src= "map.jpg">
 <description>
 The treasure map contains the location of the treasure from the ancient city of Tenochtitlan.
 </description>
 </content>
 ...
 </repository>
```

The exemplary content repository above contains exemplary content regarding the map depicted in the portion (501) of the digital media (105). Specifically, the exemplary content repository specifies an image of the map and provides a description of the map.

The multimodal application may query (700) the content repository (704) for supplemental content (514) according to the method of Figure 7 by parsing the recognition result (510) into search terms and searching for portions of the content repository for content that matches the search terms. As mentioned above, the multimodal application may parse the recognition result (510) using semantic interpretation scripts embedded in the grammar (104). For further explanation, consider the exemplary content repository above and consider that an ASR engine returns the recognition result 'tell me more about the map' to the multimodal application. The multimodal application may parse the recognition result (510) into the search term 'map' and match the 'map' search term with an content tag having an identifier 'map' in the content repository. The supplemental content (514) is then identified as information contained in the content tag having an identifier 'map' in the content repository. In the example of Figure 7, the multimodal application renders (516) the supplemental content (514) in the display regions (702) on the display screen (502) by displaying the information contained in the content tag having an identifier 'map' along with the portion (501) of the digital media (105) being rendered by the multimodal application.

Exemplary embodiments of the present invention are described largely in the context of a fully functional computer system for presenting supplemental content for digital media using a multimodal application. Readers of skill in the art will recognize, however, that the present invention also may be embodied in a computer program product disposed on signal bearing media for use with any suitable data processing system. Such signal bearing media may be transmission media or recordable media for machine-readable information, including magnetic media, optical media, or other suitable media. Examples of recordable media include magnetic disks in hard drives or diskettes, compact disks for optical drives, magnetic tape, and others as will occur to those of skill in the art. Examples of transmission media include telephone networks for voice communications and digital data communications networks such as, for example, Ethernets_{™} and networks that communicate with the Internet Protocol and the World Wide Web. Persons skilled in the art will immediately recognize that any computer system having suitable programming means will be capable of executing the steps of the method of the invention as embodied in a program product. Persons skilled in the art will recognize immediately that, although some of the exemplary embodiments described in this specification are oriented to software installed and executing on computer hardware, nevertheless, alternative embodiments implemented as firmware or as hardware are well within the scope of the present invention.

It will be understood from the foregoing description that modifications and changes may be made in various embodiments of the present invention without departing from its true spirit. The descriptions in this specification are for purposes of illustration only and are not to be construed in a limiting sense. The scope of the present invention is limited only by the language of the following claims.

## Claims

1. A method of rendering to a user data describing where to purchase an item depicted in a portion of digital media being rendered to the user, the method comprising:
rendering, by a multimodal application, operating on a multimodal device and implemented with a grammar, the portion of the digital media;
receiving, by the multimodal application, as a user request a voice utterance from a user;
determining, by the multimodal application using an automatic speech recognition (ASR) engine, a recognition result in dependence upon the voice utterance and the grammar,
querying a content repository for supplemental content associated with at least a portion of the recognition result, comprising data describing where to purchase the item; and
rendering, by the multimodal application, the supplemental content.

2. The method of claim 1, wherein the step of querying the content repository comprises parsing the recognition result into search terms, and searching for content in the content repository that matches the search terms.

3. The method of claim 2, which parses the recognition result using semantic interpretation scripts embedded in the grammar.

4. The method of claim 1 or 3, wherein the content repository comprises a database.

5. The method of any preceding claim, wherein the data describing where to purchase the item is updated in the content repository.

6. The method of claim 1, wherein the content repository is updated to indicate current stores that sell the item.

7. Apparatus for presenting supplemental content for digital media using a multimodal application, implemented with a grammar of the multimodal application in an automatic speech recognition ("ASR") engine, with the multimodal application operating on a multimodal device supporting multiple modes of interaction including a voice mode and one or more non-voice modes, the multimodal application operatively coupled to the ASR engine, the apparatus comprising a computer processor and a computer memory operatively coupled to the computer processor, the computer memory having disposed within it computer program instructions which when executed perform the steps of any of claims 1 to 6.

8. A computer program product for presenting supplemental content for digital media using a multimodal application, implemented with a grammar of the multimodal application in an automatic speech recognition ("ASR") engine, with the multimodal application operating on a multimodal device supported multiple modes of interaction including a voice mode and one or more non-voice modes, the multimodal application operatively coupled to the ASR engine, the computer program product disposed upon a recordable medium, the computer program comprising computer program instructions which when executed perform the steps of any of claims 1 to 6.
